# EUROPÄISCHE PATENTSCHRIFT

(11) **EP 1 671 841 B1**
(45) Veröffentlichungstag und Bekanntmachung des Hinweises auf die Patenterteilung: **09.04.2008**
(21) Anmeldenummer: 05026472.0
(22) Anmeldetag: 05.12.2005
(51) Int. Cl.: B60N 3/10

(54) **Klemmvorrichtung**
Clamping device
Dispositif de serrage

(30) Priorität: 14.12.2004 DE 102004060383
(43) Veröffentlichungstag der Anmeldung: 21.06.2006
(73) Patentinhaber: KTSN Kunststofftechnik Sachsen GmbH & Co. KG, 01796 Pirna (DE)
(72) Erfinder: Jäckel, René, 02627 Radibor (DE); Schwupp, Steffen, 01099 Dresden (DE)
(74) Vertreter: Stornebel, Kai

(56) Entgegenhaltungen:
- DE-A1- 10 112 649
- DE-A1- 19 533 304
- US-A- 6 050 468

## Beschreibung

Die Erfindung betrifft eine Klemmvorrichtung zum Halten von Gegenständen in einer Aufnahme, mit einem von einer Grundfläche in Richtung auf den zu klemmenden Gegenstand hervorstehenden Deformationsabschnitt aus einem elastischen Kunststoff. der einen Kontaktbereich zu dem einzuklemmenden Gegenstand aufweist. Insbesondere ist diese Klemmvorrichtung zum Halten von Getränkedosen oder Bechern in Kraftfahrzeugen geeignet. Andere Einsatzmöglichkeiten sind jedoch möglich und vorgesehen.

Aus dem Stand der Technik sind Dosenhalter oder Becherhalter bekannt, die in Gestalt eines Hohlkörpers ausgebildet sind, in die eine Getränkadose oder ein Becher hineingestellt werden können. Der Hohlkörper oder die Aufnahme weist dabei einen Innendurchmesser auf, der größer als der Aussendruchmesser des einzuführenden bzw. aufzunehmenden Gegenstandes ist. Bei einer Variation der Durchmesser der aufzunehmenden Gegenstände stellt sich das Problem einer hinreichend spielfreien Lagerung, um die Gegenstände sicher zu halten.

Die DE 195 33 304 A1 beschreibt einen Halter für einen Getränkebehälter oder dergleichen, der im Wesentlichen aus einem Tragteil und einem rohrartigen, von diesem gehaltenen Halteteil besteht. Das Halteteil besteht aus einem dünnwandigen, elastischen Kunststoff und hat drei, in gleich großen Winkelabständen zueinander liegende Einbuchtungen. An diesen Einbuchtungen liegt die Außenwandung des Getränkebehälters reibschlüssig an und wird dadurch zuverlässig gehalten.

Aus dem Stand der Technik ist ein Getränkehaltereinsatz bekannt, der aus einer Schale aus einem weichen Kunststoff besteht, der mit flexiblen Nocken ausgestattet ist, um unterschiedlich große Getränkebehälter sicher zu fixieren. Um einen möglicht geringen Kraftaufwand zu gewährleisten, wenn die Getränkebehälter eingesetzt oder entnommen werden, ist vorgesehen, dass die Nocken an den Stellen, an den sie den Getränkebehälter berühren, eine relativ große Wanddicke aufweisen, während die seitlichen Unterstützungsflächen wesentlich dünner sind. Dadurch können die seitlichen Unterstützungsflächen bei Deformationen ausweichen und dennoch eine nötige Kraftunterstützung leisten.

Nachteilig hieran ist eine schlechte Abstimmbarkeit der Funktionsflächen auf den jeweiligen Einsatzzweck.

Der Erfindung liegt daher die Aufgabe zugrunde, eine verbesserte Klemmvorrichtung für Gegenstände bereitzustellen. Erfindungsgemäß wird diese Aufgabe durch eine Klemmvorrichtung mit den Merkmalen des Anspruchs 1 gelöst. Vorteilhafte Ausgestaltungen und Weiterbildungen sind in den Unteransprüchen aufgeführt.

Die erfindungsgemäße Klemmvorrichtung zum Halten von Gefäßen, Dosen oder Gegenständen in einer Aufnahme sieht vor, dass von einer Grundfläche in Richtung auf den zu klemmenden Gegenstand ein Deformationsabschnitt hervorsteht, der aus einem elastischen Kunststoff ausgebildet ist. An diesem Deformationsabschnitt ist ein Kontaktbereich für den einzuklemmenden Gegenstand vorgesehen, der aus einem Material, vorzugsweise Kunststoff ausgebildet ist, das härter als der Kunststoff des Deformationsabschnittes ist.

Es werden also zwei unterschiedliche Kunststoffe oder Materialien mit unterschiedlichen mechanischen Eigenschaften eingesetzt, wobei die Kunststoffe so ausgewählt sind, dass sie optimal an ihren Einsatzzweck angepasst sind. Alternativ kann auch Holz, Holzimitat oder Metall als Material für den Kontaktabschnitt eingesetzt werden, nachfolgend wird jedoch nur von einem härteren Kunststoff gesprochen. Während die Deformationsabschnitte, also diejenigen Bereiche der Klemmvorrichtung, die unter Krafteinwirkung nachgeben, aus einem weichen, elastischen Kunststoff gefertigt sind, ist derjenige Bereich, der mit dem einzuklemmenden

Gegenstand in Berührung steht, aus einem im Vergleich zu dem Kunststoff des Deformationsabschnittes harten Kunststoff hergestellt. Dieser harte Kunststoff hat eine geringere Neigung, an dem einzuklemmenden Gegenstand haften zu bleiben, so dass trotz hoher Klemmkräfte ein einfaches Einführen und Entnehmen der Gegenstände gewährleistet ist. Weiterhin wird aufgrund der Härte des Kunststoffes in dem Kontaktbereich der Verschleiß verringert, so dass eine längere Gebrauchsdauer der Klemmvorrichtung im Vergleich zum Stand der Technik erzielbar ist.

Eine Weiterbildung der Erfindung sieht vor, dass die Aufnahme für den Gegenstand als ein Hohlkörper mit Boden ausgebildet ist, um den Gegenstand, z. B. eine Gertränkedose, vollständig aufnehmen zu können. Dabei ist es möglich, dass die Aufnahme als ein einseitig offener Hohlkörper, also als ein becherförmiges Gefäß ausgebildet ist, um bei Auslaufen eines Getränkes die ausgetretene Flüssigkeit auffangen zu können. Es können auch mehrere Klemmvorrichtungen einer Aufnahme zugeordnet sein, so dass von mehreren Seiten entsprechende Klemmkräfte auf den einzuklemmenden Gegenstand über die Klemmvorrichtungen ausgeübt werden.

In einer Weiterbildung der Erfindung ist es vorgesehen, dass die Klemmvorrichtung einstückig mit der Aufnahme ausgebildet ist, also dass die Klemmvorrichtung in einem Urformverfahren zusammen mit der Aufnahme hergestellt wird, beispielsweise einem Spritzgießverfahren. Dabei ist es möglich, dass die Grundfläche und die Deformationsabschnitte aus demselben Werkstoff wie die übrige Aufnahme gefertigt sind, lediglich der Kontaktabschnitt besteht aus einem anderen, nämlich härteren und vorzugsweise glatteren Kunststoff.

Um eine möglichst wirtschaftliche Herstellung zu ermöglichen, ist vorgesehen, dass der Deformationsabschnitt bzw. die Deformationsabschnitte und der Kontaktabschnitt in einer Zweikomponenten-Spritztechnik hergestellt sind, alternativ kann der Kontaktabschnitt auch in der Aufnahme in dem Kontaktbereich nachträglich eingelegt bzw, eingefügt und verklebt oder verschweißt werden. Auch ist es möglich, dass der Kontaktabschnitt auf einem Bereich des Deformationsabschnittes aufgebracht oder aufgeklebt wird.

Um insbesondere bei einer einstückigen Ausbildung der Klemmvorrichtung mit der Aufnahme bzw. einem Hohlkörper eine Sicherheit gegen den Austritt einer überschwappenden Flüssigkeit zu gewährleisten, sind sowohl die Deformationsabschnitte als auch der Kontaktabschnitt geschlossenwandig ausgebildet.

Sollte die Haltekraft aufgrund der elastischen Rückstellkraft der Deformationselemente nicht ausreichend sein, ist es vorgesehen, dass zusätzlich ein Federelement dem Kontaktabschnitt zugeordnet ist, das den Kontaktabschnitt in Richtung auf den zu klemmenden Gegenstand mit einer Kraft beaufschlagt. Diese Feder bzw. dieses Federelement kann auf der Rückseite der Klemmvorrichtung angeordnet sein und beispielsweise eine Druck- oder Drehfeder ausbilden. Ebenfalls kann eine Federlasche, beispielsweise aus Metall, dem Kontaktabschnitt zugeordnet sein, um eine entsprechende Kraftbeaufschlagung und damit ein sicheres Einspannen der aufzunehmenden Gegenstände zu gewährleisten.

Eine Weiterbildung der Erfindung sieht vor, dass der Kontaktbereich und der Kontaktabschnitt als eine Einführschräge für den aufzunehmenden Gegenstand ausgebildet sind. Der harte, wenig elastische Kunststoff des Kontaktabschnittes dient somit auch dazu, dass der Gegenstand in die Aufnahme sicher eingeführt werden kann und leicht auf dem Kontaktabschnitt in die Aufnahme hineingleitet. Dazu ist es vorteilhaft, wenn die Deformations- und Kontaktabschnitte gemeinsam eine konische oder pyramidenförmige Gestalt ausbilden, wobei der Kontaktabschnitt an der Fläche ausgebildet ist, die der Einführrichtung des Gegenstandes gegenüberliegt. Der Kontaktabschnitt ist bevorzugt über die abgerundete Spitze der pyramidenförmigen oder konischen Gestalt hinaus herumgezogen, damit nur der harte Kunststoff oder Werkstoff an dem einzuklemmenden Gegenstand anliegt.

Nachfolgend wird ein Ausführungsbeispiel der Erfindung anhand zweier Figuren näher erläutert. Es zeigen:
- Figur 1 -: eine Klemmvorrichtung in perspektivischer Ansicht; sowie
- Figur 2 -: eine Klemmvorrichtung gemäß Figur 1 in Rückansicht.

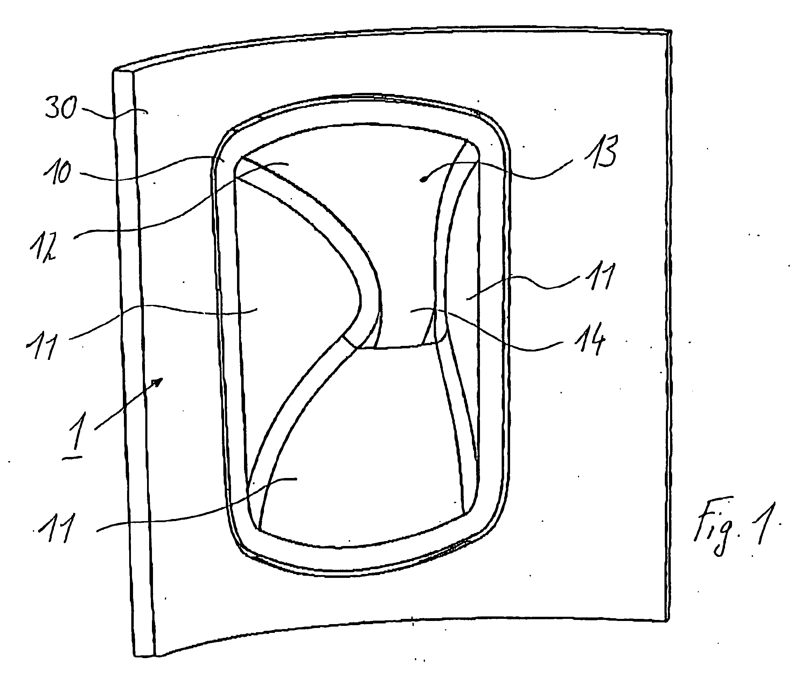

Figur 1 zeigt in einer perspektivischen Darstellung eine Klemmvorrichtung 1 mit einer Grundfläche 10, von der pyramidenförmig vier Seitenflächen 11, 12 hervorragen. Die Seitenflächen 11, 12 sind als drei Deformationsabschnitte 11 und einen Kontaktabschnitt 12 ausgebildet. Die Deformationsabschnitte 11 bestehen aus einem weichen, elastischen, deformierbaren Kunststoff und stellen eine Rückstellkraft bereit, sofern die Deformationsabschnitte 11 in Richtung auf die Grundfläche 10 eingedrückt werden. Neben den drei Deformationsabschnitten 11 weist die Klemmvorrichtung 1 einen Kontaktabschnitt 12 auf, der in dem vorliegenden Ausführungsbeispiel in einem Zweikomponenten-Spritzgießverfahren in die Deformationsabschnitte 11 eingespritzt ist. Der Kontaktabschnitt 12 ist an der Oberseite der Klemmvorrichtung 1 angeordnet, liegt also der Einführrichtung des einzuklemmenden Gegenstandes gegenüber. Aufgrund der pyramidenförmigen Ausgestaltung der Deformationsabschnitte 11 und des Kontaktabschnittes 12 bildet der Kontaktabschnitt 12 eine Einführschräge 13 aus, auf der beim Einführen eines Gegenstandes dieser entlanggleiten kann.

Die Klemmvorrichtung 1 ist entweder in einer Aufnahme 30 befestigt, beispielsweise aufgeklebt oder eingeclipst bzw. verschraubt oder aber einstückig mit der nur teilweise dargestellten Aufnahme 30 ausgebildet, beispielsweise in einem Spritzgießverfahren eingespritzt. Wird nun ein einzuklemmender Gegenstand in die Aufnahme 30 eingestellt, gleitet diese auf der Einführschräge 13 des Kontaktabschnittes 12 entlang und übt eine Kraft in Richtung auf die Grundfläche 10 aus. Dadurch werden die Deformationsabschnitte 11 elastisch in Richtung auf die Grundfläche 10 hin verformt und der Kontaktabschnitt 12 belagert sich von dem einzuführenden Gegenstand weg. Hat der größte Durchmesser des einzuführenden Gegenstandes den Spitzenbereich 14 des Kontaktabschnittes 12, vorliegend an der abgeflachten Pyramidenspitze angeordnet, erreicht, wird keine weitere Verformungsbewegung durchgeführt, und durch die Rückstellkraft aufgrund der elastischen Deformationsabschnitte 11 wird eine Klemmkraft auf den einzuklemmenden Gegenstand über den Spitzenbereich 14 ausgeübt. Der einzuklemmende Gegenstand, beispielsweise eine Getränkedose, wird in der Aufnahme 30 sicher aufbewahrt, indem neben der Gewichtskraft, die auf einen nicht dargestellten Boden wirkt, Beschleunigungskräfte über die Klemmvorrichtung 1 oder mehrere Klemmvorrichtungen 1 aufgenommen werden. Dadurch wird eine Aufnahme 30 für Gefäße unterschiedlicher Durchmesser nutzbar, da diese sicher und spielfrei in der Aufnahme 30, beispielsweise in Röhrenform ausgebildet, gehalten werden können.

Die dargestellten Klemmvorrichtungen 1 sind an der Innenseite der Aufnahme 30 angeordnet und ragen in diese hinein. Nachdem sie beim Einstellen des Gegenstandes radial nach außen bewegt werden, halten die Kontaktabschnitte 12 mit ihren Spitzenbereichen 14 immer Kontakt mit dem Gegenstand, so dass dieser in der Aufnahme 30 nicht wackelt.

Da der einzuführende Gegenstand sowohl beim Einführen als auch während des Verbleibes innerhalb der Aufnahme 30 nur mit dem Kontaktabschnitt 12 in Berührung kommt und das Material des Kontaktabschnittes 12 im Vergleich zu dem der Deformationsabschnitte 11 härter und glatter ist, ergeben sich Vorteile bezüglich des Materialabriebes bei dem Kontaktabschnitt 12. Während die Deformationsabschnitte 11 weich und elastisch sind und einen relativ hohen Reibbeiwert aufweisen, sind die Materialien des Kontaktabschnittes 12, verglichen mit dem der Deformationsabschnitte 11, härter und glatter. Dadurch können die einzuführenden Gegenstände besser hineingleiten und ein übermäßiger Verschleiß wird vermieden. Aufgrund der unterschiedlichen Materialien der Kontaktabschnitte 12 und der Deformationsabschnitte 11 kann die Klemmvorrichtung optimal auf die auszuführenden Funktionen eingestellt werden, nämlich auf das leichte Einführen eines Gegenstandes und das sichere Halten eines solchen.

Das bevorzugte Fertigungsverfahren zur Vorstellung einer solchen Klemmvorrichtung ist das Zweikomponenten-Spritzgießen. Die Klemmvorrichtung 1 kann entweder an der Aufnahme 30, vorzugsweise einem geschlossenen Hohlkörper mit Boden, angeformt oder zusammen mit ihm ausgebildet sein oder durch Fügen mit der Aufnahme 30 mit dieser verbunden werden.

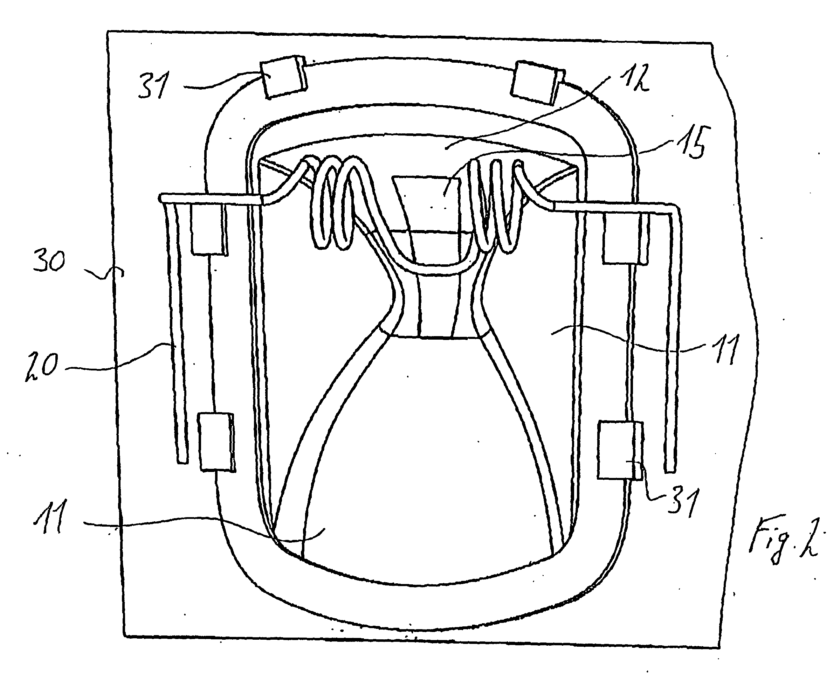

Sollte die Spannkraft der Deformationsabschnitte 11 nicht ausreichen, um einen sicheren Stand bzw. eine ausreichend große Klemmkraft bereitzustellen, ist in einer Variante eine zusätzliche Feder 20 vorgesehen, die in der Figur 2 dargestellt ist. Die Figur 2 zeigt in Rückansicht eine Klemmvorrichtung 1 gemäß Figur 1, die in einer nur teilweise dargestellten Aufnahme 30 über Laschen 31 eingeklemmt ist. Das Federelement 20 wirkt auf die Innenseite des Kontaktabschnittes 12 und unterstützt die Deformationsabschnitte 11. Die Innenseite des Kontaktabschnittes 12 kann im Bereich des Kontaktes mit dem Federelement 20 eine Verstärkung 15 oder einen Gleitbereich aufweisen, beispielsweise eine aufgeclipste Metallschiene oder einen harten Kunststoff. Alternativ zu der dargestellten Feder 20 kann das Federelement auch aus einer Metallzunge oder einer Drehfeder hergestellt sein. Aufgrund der Funktionsteilung des Kontaktabschnittes 12 als eine Hartkomponente mit Haltefunktion der Gegenstände oder Gefäße und der Weichkomponente in Gestalt der Deformationsabschnitte 11 zum Ausgleich der unterschiedlichen Kräfte ergeben sich Vorteile bei den Einstell- und Auszugskräften beim Einführen oder Entnehmen der Gegenstände sowie bezüglich des Materialabriebes. Durch die Fertigung in Zweikomponenten-Spritzgusstechnik kann eine wirtschaftliche Fertigung in hoher Stückzahl erfolgen.

## Patentansprüche

1. Klemmvorrichtung zum Halten von Gegenständen, insbesondere Gefäßen für Getränke, in einer Aufnahme, mit einem von einer Grundfläche in Richtung auf den zu klemmenden Gegenstand hervorstehenden Deformationsabschnitt aus einem elastischen Kunststoff, der einen Kontaktbereich zu dem einzuklemmenden Gegenstand aufweist, **dadurch gekennzeichnet, dass** im Kontaktbereich zu dem einzuklemmenden Gegenstand ein Kontaktabschnitt (12) aus einem Material, insbesondere Kunststoff angeordnet ist, das härter als der Kunststoff des. Deformationsabschnittes (11) ist.

2. Klemmvorrichtung nach Anspruch 1, **dadurch gekennzelchnet,** dass die Aufnahme (30) als ein Hohlkörper mit Boden ausgebildet ist.

3. Klemmvorrichtung nach Anspruch 1 oder 2, **dadurch gekennzeichnet, dass** die Aufnahme (30) als ein einseitig offener Hohlkörper ausgebildet ist.

4. Klemmvorrichtung nach einem der voranstehenden Ansprüche, **dadurch gekennzeichnet, dass** die Klemmvorrichtung (1) einstückig mit der Aufnahme (30) ausgebildet ist.

5. Klemmvorrichtung nach einem der voranstehenden Ansprüche, **dadurch gekennzeichnet, dass** der Deformationsabschnitt (11) und der Kontaktabschnitt (12) in einer Zweikomponenten-Spritztechnik hergestellt sind.

6. Klemmvorrichtung nach Anspruch 5, **dadurch gekennzeichnet, dass** der Kontaktabschnitt (12) in dem Deformationsabschnitt (11) eingespritzt ist.

7. Klemmvorrichtung nach einem der voranstehenden Ansprüche, **dadurch gekennzeichnet, dass** der Deformationsabschnitt (11) und der Kontaktabschnitt (12) geschlossenwandig ausgebildet sind.

8. Klemmvorrichtung nach einem der voranstehenden Ansprüche, **dadurch gekennzeichnet, dass** dem Kontaktabschnitt (12) ein Federelement (20) zugeordnet ist, das den Kontaktabschnitt (12) in Richtung auf den einzuklemmenden Gegenstand mit einer Kraft beaufschlagt.

9. Klemmvorrichtung nach einem der voranstehenden Ansprüche, **dadurch gekennzeichnet, dass** der Kontaktabschnitt (12) als eine Einführschräge (13) ausgebildet ist.

10. Klemmvorrichtung nach einem der voranstehenden Ansprüche, **dadurch gekennzeichnet, dass** der Deformationsabschnitt (11) und der Kontaktabschnitt (12) gemeinsam eine konische oder pyramidenförmige Gestalt ausbilden.

## Claims

1. Clamping device for retaining articles, in particular receptacles for drinks, in a holder, having a deformation portion which projects from a base surface in the direction of the article which is to be clamped and is made of a flexible plastic which has a region of contact in relation to the article which is to be clamped in, **characterized in that** the region of contact in relation to the article which is to be clamped in contains a contact portion (12) made of a material, in particular plastic, which is harder than the plastic of the deformation portion (11).

2. Clamping device according to Claim 1, **characterized in that** the holder (30) is designed as a hollow body with a base.

3. Clamping device according to Claim 1 or 2, **characterized in that** the holder (30) is designed as a hollow body which is open on one side.

4. Clamping device according to one of the preceding claims, **characterized in that** the clamping device (1) is formed integrally with the holder (30).

5. Clamping device according to one of the preceding claims, **characterized in that** the deformation portion (11) and the contact portion (12) are produced by two-component injection moulding.

6. Clamping device according to Claim 5, **characterized in that** the contact portion (12) is injection-moulded in the deformation portion (11).

7. Clamping device according to one of the preceding claims, **characterized in that** the deformation portion (11) and the contact portion (12) are designed with closed walls.

8. Clamping device according to one of the preceding claims, **characterized in that** the contact portion (12) is assigned a spring element (20) which forces the contact portion (12) in the direction of the article which is to be clamped in.

9. Clamping device according to one of the preceding claims, **characterized in that** the contact portion (12) is designed as an introduction slope (13).

10. Clamping device according to one of the preceding claims, **characterized in that** the deformation portion (11) and the contact portion (12) together are in the form of a cone or pyramid.

## Revendications

1. - Dispositif de serrage pour le maintien d'objets, en particulier des récipients à boissons, dans un logement, comportant une partie de déformation en matière synthétique élastique faisant saillie à partir d'une surface de base dans la direction de l'objet à serrer, présentant une zone de contact pour l'objet à serrer, **caractérisé en ce que** dans la zone de contact pour l'objet à serrer est disposée une partie de contact (12) en une matière, en particulier une matière synthétique qui est plus dure que la matière synthétique de la partie de déformation (11).

2. - Dispositif de serrage selon la revendication 1, **caractérisé en ce que** le logement (30) est réalisé sous forme de corps creux avec un fond.

3. - Dispositif de serrage selon la revendication 1 ou 2, **caractérisé en ce que** le logement (30) est réalisé sous forme de corps creux ouvert d'un côté.

4. - Dispositif de serrage selon l'une des revendications précédentes, **caractérisé en ce que** le dispositif de serrage (1) est réalisé d'une seule pièce avec le logement (30).

5. - Dispositif de serrage selon l'une des revendications précédentes, **caractérisé en ce que** la partie de déformation (11) et la partie de contact (12) sont réalisées par une technique d'injection à deux composants.

6. - Dispositif de serrage selon la revendication 5, **caractérisé en ce que** la partie de contact (12) est injectée dans la partie de déformation (11).

7. - Dispositif de serrage selon l'une des revendications précédentes, **caractérisé en ce que** la partie de déformation (11) et la partie de contact (12) sont réalisées avec une paroi fermée.

8. - Dispositif de serrage selon l'une des revendications précédentes, **caractérisé en ce qu'**un élément ressort (20) est associé à la partie de contact (12) qui sollicite la partie de contact (12) avec une force dirigée vers l'objet à serrer.

9. - Dispositif de serrage selon l'une des revendications précédentes, **caractérisé en ce que** la partie de contact (12) est réalisée sous forme de surface inclinée d'introduction (13).

10. - Dispositif de serrage selon l'une des revendications précédentes, **caractérisé en ce que** la partie de déformation (11) et la partie de contact (12) définissent ensemble une structure conique ou pyramidale.
